(19)

Europäisches
Patentamt

European
Patent Office

Office européen
des brevets

(11) **EP 4 223 520 A1**

(12) **EUROPEAN PATENT APPLICATION**
published in accordance with Art. 153(4) EPC

(43) Date of publication:
**09.08.2023 Bulletin 2023/32**

(21) Application number: **21875823.3**

(22) Date of filing: **30.09.2021**

(51) International Patent Classification (IPC):
**B32B 27/30** (2006.01)　　　**C08F 214/26** (2006.01)
**C08L 27/18** (2006.01)　　　**C08K 3/04** (2006.01)
**F16L 9/12** (2006.01)

(52) Cooperative Patent Classification (CPC):
(C-Sets available)
**C08L 23/0846; B65D 35/08; C08F 210/02;**
**C08F 214/265; C08K 3/017; C08K 3/04; F16L 9/12;**
**F16L 11/04; F16L 11/127; Y02E 60/50** (Cont.)

(86) International application number:
**PCT/JP2021/036298**

(87) International publication number:
**WO 2022/071527 (07.04.2022 Gazette 2022/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.09.2020　JP 2020166518**

(71) Applicant: **Daikin Industries, Ltd.**
**Osaka-shi, Osaka 530-0001 (JP)**

(72) Inventors:
• **KUWAJIMA, Yuuki**
**Osaka-shi, Osaka 530-0001 (JP)**
• **KAMIYA, Yukinori**
**Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **FLUORINE RESIN MATERIAL, LAMINATE, TUBE, AND TUBE MANUFACTURING METHOD**

(57)　Provided is a fluororesin material containing a fluororesin, wherein the fluororesin has a carbonyl group, the total number of carbonyl groups being 1 or more and less than 800 per $10^6$ main-chain carbon atoms, and the fluororesin contains ethylene unit and tetrafluoroethylene unit, and wherein when the fluororesin material is heated at a rate of 10°C/minute, the initial pyrolysis temperature when the mass reduction of the fluororesin material reaches 1% by mass is 390°C or more.

EP 4 223 520 A1

**(Cont. next page)**

(52) Cooperative Patent Classification (CPC): (Cont.)

C-Sets
**C08F 214/265, C08F 210/02;**
**C08F 214/265, C08F 210/02, C08F 214/28;**
**C08K 3/04, C08L 27/18**

**Description**

TECHNICAL FIELD

The present disclosure relates to a fluororesin material, a laminate, a tube, and a method for producing a tube.

BACKGROUND ART

Tubes formed of a fluororesin are known. Laminated tubes formed by laminating a fluororesin and other polymers are also known.

As a method for producing such a laminated tube, Patent Literature 1 proposes a method for producing a multilayer laminate in which at least a polyamide (A) and a fluorine-containing ethylenic polymer (B) are laminated by a simultaneous multilayer coextrusion method using a coextrusion apparatus composed of a die and a plurality of extruders that supply resins to the die to obtain a laminate constituted by the polyamide (A) and fluorine-containing ethylenic polymer (B), wherein the temperature of the die is set within a range of higher than 260°C and 310°C or less.

RELATED ART

PATENT DOCUMENT

Patent Document 1: WO2001/070485

SUMMARY OF THE INVENTION

PROBLEM TO BE SOLVED BY THE INVENTION

An object of the present disclosure is to provide a fluororesin material from which a tube having a smooth inner surface can be produced even when a tube is produced by extruding at a high line speed.

MEANS FOR SOLVING THE PROBLEM

One embodiment of the present disclosure provides a fluororesin material containing a fluororesin, wherein the fluororesin has a carbonyl group, the total number of carbonyl groups being 1 or more and less than 800 per $10^6$ main-chain carbon atoms, and the fluororesin contains ethylene unit and tetrafluoroethylene unit, and wherein when the fluororesin material is heated at a rate of 10°C/minute under an air atmosphere, the initial pyrolysis temperature when the mass reduction of the fluororesin material reaches 1% by mass is 390°C or more.

Another embodiment of the present disclosure provides a fluororesin material containing a fluororesin, wherein the fluororesin has a carbonyl group, the total number of carbonyl groups being 1 or more and less than 800 per $10^6$ main-chain carbon atoms, and the fluororesin contains ethylene unit and tetrafluoroethylene unit, and wherein the fluororesin material has a critical shear rate at 280°C within a range of 50 to 500 sec$^{-1}$.

The fluororesin material preferably has electric conductivity. The fluororesin is preferably a melt-fabricable fluororesin.

The fluororesin preferably further contains hexafluoropropylene unit.

The fluororesin material preferably further contains an electroconductive material.

The electroconductive material is preferably carbon black.

The average particle size of the carbon black is preferably 500 to 1,000 $\mu$m.

One embodiment of the present disclosure provides a laminate comprising a fluororesin layer containing the fluororesin material described above and a non-fluororesin layer containing a non-fluororesin.

Another embodiment of the present disclosure provides a laminate comprising a fluororesin layer containing a fluororesin material and a non-fluororesin layer containing a non-fluororesin, wherein the fuel permeation rate X (g/m$^2$/day) of the laminate and Y determined from the surface resistivity of the laminate satisfy all the following relational expressions:

$$Y < 800/X$$

$$Y < 250$$

$$X < 10$$

wherein X represents the fuel permeation rate for the laminate measured at 60°C using CE20, the fuel permeation rate measured at 60°C using CE50, or the fuel permeation rate measured at 60°C using CE85; and

Y represents a ratio of the surface resistivity measured using CE20, the surface resistivity measured using CE50, or the surface resistivity measured using CE85, based on the surface resistivity measured using CE85 being 100; and each surface resistivity is measured after encapsulating CE20, CE50, or CE85 in the laminate at 60°C for 1,000 hours, then removing the CE20, CE50, or CE85, removing the laminate from an electric furnace at 60°C after 3 hours has passed, and allowing the laminate to be left to stand for an hour.

The thickness of the fluororesin layer is preferably 50 to 200 $\mu$m.

The laminate preferably contains a polyamide resin layer containing a polyamide resin as the non-fluororesin layer.

It is preferred that the fluororesin layer and the polyamide resin layer be adhered and that the interlayer adhesive strength between the fluororesin layer and the polyamide resin layer be 30 N/cm or more.

The laminate preferably comprises an ethylene/vinyl alcohol copolymer (EVOH) layer containing an EVOH resin as the non-fluororesin layer.

The thickness of the EVOH layer is preferably 50 to 300 $\mu$m.

The present disclosure provides a multilayer tube formed of the laminate described above.

The present disclosure provides a monolayer tube containing the fluororesin material described above.

It is preferred that the inner surface of the tube be formed of the fluororesin material and that the inner surface have a surface roughness Ra of 1.0 $\mu$m or less.

The present disclosure provides a method for producing the tube described above, comprising forming the fluororesin material at a line speed of 15 m/min or more to obtain the tube.

EFFECTS OF INVENTION

The present disclosure can provide a fluororesin material from which a tube having a smooth inner surface can be produced even when a tube is produced by extruding at a high line speed.

DESCRIPTION OF EMBODIMENTS

Specific embodiments of the present disclosure will now be described in detail below, but the present disclosure is not limited to the following embodiments.

A fluororesin contained in a first fluororesin material of the present disclosure has a carbonyl group, the total number of carbonyl groups is 1 or more and less than 800 per $10^6$ main-chain carbon atoms, the fluororesin contains ethylene unit and tetrafluoroethylene unit, and wherein when the fluororesin material is heated at a rate of 10°C/min, the initial pyrolysis temperature when the mass reduction of the fluororesin material reaches 1% by mass is 390°C or more.

A fluororesin contained in a second fluororesin material of the present disclosure has a carbonyl group, the total number of carbonyl groups is 1 or more and less than 800 per $10^6$ main-chain carbon atoms, and the fluororesin contains ethylene unit and tetrafluoroethylene unit, and wherein the fluororesin material has a critical shear rate at 280°C within a range of 50 to 500 $\sec^{-1}$.

The production method described in Patent Literature 1 can provide a multilayer laminate of which layers are adhered by employing a relatively high die temperature. However, for a reason such as exposure of the fluororesin to a relatively high die temperature, the inner surface of a tube to be obtained tends to become rough. Particularly in the case of extruding at a high temperature and a high line speed, the inner surface of a tube to be obtained may particularly noticeably become rough.

An intensive study thus has been made on a means for solving the above problems, and it has been found that use of a fluororesin material having a high initial pyrolysis temperature as a material for extrusion forming enables a tube to be produced, the tube having a smooth inner surface, even in the case of extruding at a high line speed. Further, a method for producing a fluororesin material having a high initial pyrolysis temperature also has been found. The first fluororesin material of the present disclosure has been completed based on these findings.

An intensive study thus has been made on a means for solving the above problems, and it has been found that use of a fluororesin material that shows a critical shear rate in an extremely restricted numerical range as a material for extrusion forming enables a tube to be produced, the tube having a smooth inner surface, even in the case of extruding at a high line speed. Further, a method for producing a fluororesin that shows a critical shear rate in an extremely restricted numerical range also has been found. The second fluororesin material of the present disclosure has been completed based on these findings.

Hereinafter, constituents common in the first fluororesin material of the present disclosure and the second fluororesin material of the present disclosure will be described. Hereinafter, the first fluororesin material of the present disclosure and the second fluororesin material of the present disclosure may be collectively and simply referred to as "the fluororesin material of the present disclosure".

In the fluororesins contained in the first and second fluororesin materials of the present disclosure, the total number of carbonyl groups is 1 or more and less than 800 per $10^6$ main-chain carbon atoms. In respect that further higher adhesion can be obtained, the total number of carbonyl groups described above is preferably 15 or more, even more preferably 30 or more, particularly preferably 50 or more, preferably 400 or less, more preferably 320 or less, and even more preferably 300 or less per $10^6$ main-chain carbon atoms. When the total number of carbonyl groups is 3 or more per $10^6$ main-chain carbon atoms, appropriate adhesion can be obtained. A more preferable lower limit is 15, an even more preferable lower limit is 30, and a particularly preferable lower limit is 50, per $10^6$ main-chain carbon atoms. In view of productivity, the upper limit of the number of carbonyl groups at the end is more preferably 320, for example.

In the present disclosure, the "carbonyl group" is a divalent carbon group including a carbon-oxygen double bond, and is typified by - C(=O)-. The functional group containing the carbonyl group is not limited, and examples include those containing a carbonyl group as a part of the chemical structure, such as a carbonate group, a carboxylic acid halide group (a halogenoformyl group), a formyl group, a carboxyl group, an ester bond (-C(=O)O-), an acid anhydride bond (-C(=O)O-C(=O)-), an isocyanate group, an amide group, an imide group (-C(=O)-NH-C(=O)-), a urethane bond (-NH-C(=O)O-), a carbamoyl group ($NH_2$-C(=O)-), a carbamoyloxy group ($NH_2$-C(=O)O-), a ureido group ($NH_2$-C(=O)-NH-), and an oxamoyl group ($NH_2$-C(=O)-C(=O)-) .

In the amide group, the imide group, the urethane bond, the carbamoyl group, the carbamoyloxy group, the ureido group, the oxamoyl group, and the like, a hydrogen atom bonded to the nitrogen atom thereof may be replaced with a hydrocarbon group such as an alkyl group.

In terms of the ease of introduction and in terms of suitable heat resistance and good adhesion at a relatively low temperature of the fluororesin, the carbonyl group is preferably an amide group, a carbamoyl group, a carboxyl group, a carbonate group, a carboxylic acid halide group, and an acid anhydride bond, and more preferably an amide group, a carbamoyl group, a carbonate group, a carboxylic acid halide group, and an acid anhydride bond.

The carbonyl group, in particular, is preferably at least one selected from the group consisting of a carbonate group and a carboxylic halide group. The carbonate group and carboxylic halide group may be groups described in International Publication No. WO 99/45044.

The fluororesin may be a polymer having a carbonyl group either at a main-chain end or in a side chain of the polymer, or may be a polymer having a carbonyl group both at a main-chain end and in a side chain. When the polymer has a carbonyl group at a main-chain end, the polymer may have a carbonyl group at both ends of the main chain, or may have a carbonyl group only at one end.

The number of carbonyl groups described above can be calculated from an infrared absorption spectrum analysis using an infrared spectrophotometer.

The number of carbonyl groups can be determined in the following manner: a film sheet having a thickness of 50 to 200 μm obtained by compression-molding a fluororesin at a molding temperature 50°C higher than the melting point thereof under a molding pressure of 5 MPa is analyzed for an infrared absorption spectrum using an infrared spectrophotometer; the obtained infrared absorption spectrum is compared with the infrared absorption spectrum of a known film to determine the type of characteristic absorption of the functional group; and the number is calculated from spectral differences according to the following formula.

$$\text{Number of carbonyl groups (per } 10^6 \text{ main-chain carbon atoms)} =$$

$$I \times K/t$$

I:  Absorbance
K:  Correction factor
t:  Film thickness (mm)

The correction factors for the functional groups are exemplified in Table 1.

[Table 1]

Table 1

| End group | Absorption frequency (cm$^{-1}$) | Correction factor |
|---|---|---|
| -OC(=O)O-R | 1817 | 1426 |
| -COF | 1884 | 405 |
| -COOH | 1813, (1795-1792), 1775 | 455 |
| -COOCH$_3$ | 1795 | 355 |
| -CONH$_2$ | 3438 | 408 |
| -CH$_2$OH | 3648 | 2325 |

The correction factors in Table 1 are values that have been determined from the infrared absorption spectra of model compounds in order to calculate the number of carbonyl groups per $10^6$ main-chain carbon atoms.

Examples of methods for introducing the carbonyl group into the main-chain and/or side-chain end include a method involving copolymerizing a monomer (β) containing the carbonyl group to introduce the carbonyl group, a method involving using a compound having or producing the carbonyl group as a polymerization initiator, a method involving using a compound having or producing the carbonyl group as a chain transfer agent, and a method involving introducing the carbonyl group into a fluoropolymer by way of a polymer reaction, and a method involving these methods in combination.

The monomer (β) containing the carbonyl group for introducing the carbonyl group by copolymerization is not limited as long as it is a monomer that is copolymerizable with a monomer yielding a fluororesin and that has the carbonyl group. Specific examples are as follows.

First examples of the monomer (β) include aliphatic unsaturated carboxylic acids described in International Publication No. WO 2005/100420. The unsaturated carboxylic acids preferably have at least one polymerizable carbon-carbon unsaturated bond within one molecule and at least one carbonyloxy group (-C(=O)-O-) within one molecule.

The aliphatic unsaturated carboxylic acid may be an aliphatic unsaturated monocarboxylic acid, or may be an aliphatic unsaturated polycarboxylic acid having two or more carboxyl groups. Examples of the aliphatic unsaturated monocarboxylic acid include unsaturated aliphatic monocarboxylic acids having 3 to 6 carbon atoms, such as (meth)acrylic acid and crotonic acid.

Examples of the aliphatic unsaturated polycarboxylic acid include unsaturated aliphatic polycarboxylic acids having 3 to 6 carbon atoms, such as maleic acid, fumaric acid, itaconic acid, citraconic acid, mesaconic acid, aconitic acid, maleic anhydride, itaconic anhydride, and citraconic anhydride.

Second examples of the monomer (β) include unsaturated compounds represented by the formula:

$$CX^7_2=CY^1\text{-}(Rf^4)_n\text{-}Z^2$$

wherein $Z^2$ is the above carbonyl group; $X^7$ and $Y^1$ are the same or different and are a hydrogen atom or a fluorine atom; $Rf^4$ is an alkylene group having 1 to 40 carbon atoms, a fluorine-containing oxyalkylene group having 1 to 40 carbon atoms, a fluorine-containing alkylene group having an ether bond and having 2 to 40 carbon atoms, or a fluorine-containing oxyalkylene group having an ether bond and having 2 to 40 carbon atoms; and n is 0 or 1.

The content of the unit introduced by copolymerization from the monomer (β) containing the carbonyl group is preferably 0.05 mol% or more, and more preferably 0.1 mol% or more. When the content is excessive, gelation and a vulcanization reaction likely occur during thermal melting, and thus the upper limit of the content of the monomer (β) unit is preferably 5 mol%, and more preferably 3 mol%.

Various methods can be employed in order to obtain a fluororesin having a carboxylic halide group. For example, such a fluororesin can be obtained by pyrolyzing (decarbonizing) the fluororesin having a carbonate group mentioned above by heating. The heating temperature depends on the kind of carbonate group and the kind of fluororesin, but heating is made such that the temperature of the polymer itself reaches 270°C or more, preferably 280°C or more, and particularly preferably 300°C or more. The upper limit of the heating temperature is preferably made to be equal to or less than the pyrolysis temperature of the portion of the fluororesin other than the carbonate group.

The fluororesin may have a heterocyclic group or an amino group at the main-chain end or the side-chain end of the polymer.

The heterocyclic group has a hetero atom (such as a nitrogen atom, a sulfur atom, or an oxygen atom) within the ring of its hetero ring moiety, may be a saturated ring or an unsaturated ring, and may be a single ring or a condensed ring. The heterocyclic group is preferably an oxazolyl group.

The amino group is a monovalent functional group obtained by removing hydrogen from ammonia or a primary or secondary amine. Specifically, the amino group is a group represented by, for example, the formula:

$$-NR^1R^2$$

wherein $R^1$ and $R^2$ may be the same or different, and are a hydrogen atom or a monovalent organic group having 1 to 20 carbon atoms. Specific examples of the amino group include $-NH_2$, $-NH(CH_3)$, $-N(CH_3)_2$, $-NH(CH_2CH_3)$, $-N(C_2H_5)_2$, and $-NH(C_6H_5)$.

The melting point of the fluororesin is preferably 120°C or more, more preferably 140°C or more, even more preferably 150°C or more, particularly preferably 160°C or more, preferably less than 324°C, more preferably 320°C or less, even more preferably 270°C or less, particularly preferably 250°C or less, and most preferably 230°C or less.

The melt flow rate (MFR) of the fluororesin at an arbitrary temperature (for example, 265°C or 297°C) within the range of about 230 to 350°C, which is the molding temperature range of fluororesins in general, is preferably 0.5 g/10 min or more, more preferably 1.0 g/10 min or more, even more preferably 1.5 g/10 min or more, particularly preferably 2.0 g/10 min or more, most preferably 2.5 g/10 min or more, preferably 100 g/10 min or less, more preferably 50 g/10 min or less, even more preferably 20 g/10 min or less, and particularly preferably 10 g/10 min or less. The melt flow rate can be identified by measuring the mass (g) of the fluororesin flowing out from a nozzle having an inner diameter of 2 mm and a length of 8 mm per unit time (10 minutes) at an arbitrary temperature (for example, 265°C or 297°C) under an arbitrary load (for example, 2.16 kg or 5 kg) using a melt indexer, for example.

The fluororesin contained in the fluororesin material of the present disclosure contains ethylene unit and tetrafluoroethylene unit.

The fluororesin contained in the fluororesin material of the present disclosure is a partially crystalline fluoropolymer, and is not a fluoroelastomer but a fluoroplastic. The fluororesin has a melting point and has thermoplasticity. The fluororesin may be melt-fabricable or may be non melt-processible. In respect that a tube can be produced by melt extrusion forming with high productivity, the fluororesin is preferably a melt-fabricable fluororesin.

In the present disclosure, melt-fabricability means that the polymer can be melted and processed using a conventional processing device such as an extruder and an injection molding machine. Accordingly, the melt-fabricable fluororesin usually has a melt flow rate of 0.01 to 500 g/10 min.

The fluororesin contained in the fluororesin material of the present disclosure may have a polymerization unit based on other monomers copolymerizable with ethylene unit and tetrafluoroethylene unit. The other monomers can be suitably selected from, for example, hexafluoropropylene (HFP), propylene, perfluoro(alkyl vinyl ether), perfluoroalkyl ethylene, hydrofluoroolefin, fluoroalkyl ethylene, perfluoro(alkyl aryl ether), and the like.

The fluororesin contained in the fluororesin material of the present disclosure is preferably at least one selected from the group consisting of a tetrafluoroethylene (TFE)/ethylene copolymer [ETFE] and a TFE/ethylene/HFP copolymer.

In the present disclosure, the content of each monomer unit of the fluororesin can be calculated by suitably combining NMR, FT-IR, an elemental analysis, and an X-ray fluorescence analysis according to the kind of monomer.

ETFE is a copolymer containing ethylene unit and tetrafluoroethylene unit. Introduction of ethylene unit and TFE unit to a copolymer enables a tube having a smoother inner surface to be obtained and also facilitates production of a laminate by laminating with other materials. ETFE is preferably a copolymer having a molar ratio of TFE unit to ethylene unit (TFE unit/ethylene unit) of 20/80 or more and 90/10 or less. A more preferable molar ratio is 37/63 or more and 85/15 or less, and an even more preferable molar ratio is 38/62 or more and 80/20 or less. The ETFE may be a copolymer composed of TFE, ethylene, and a monomer copolymerizable with TFE and ethylene. Examples of the copolymerizable monomer include monomers represented by the following formulas: $CH_2=CX^5Rf^3$, $CF_2=CFRf^3$, $CF_2=CFORf^3$, and $CH_2=C(Rf^3)_2$, wherein $X^5$ represents H or F, and $Rf^3$ represents a fluoroalkyl group that may contain an ether bond. Of these, preferable is at least one selected from the group consisting of fluorine-containing vinyl monomers represented by $CF_2=CFRf^3$, $CF_2=CFORf^3$, and $CH_2=CX^5Rf^3$, more preferable is at least one selected from the group consisting of HFP, perfluoro(alkyl vinyl ethers) represented by $CF_2=CF-ORf^4$, wherein $Rf^4$ represents a perfluoroalkyl group having 1 to 5 carbon atoms, and fluorine-containing vinyl monomers represented by $CH_2=CX^5Rf^3$, wherein $Rf^3$ represents a perfluoroalkyl group having 1 to 8 carbon atoms, and even more preferable is HFP. The monomer copolymerizable with TFE and ethylene may be an aliphatic unsaturated carboxylic acid such as itaconic acid and itaconic anhydride. The content of the monomer unit copolymerizable with TFE and ethylene in ETFE is preferably 0.1 to 10 mol%, more preferably 0.1 to 5 mol%, and particularly preferably 0.2 to 4 mol%.

The TFE/ethylene copolymer is also preferably a TFE/ethylene/HFP copolymer containing a polymerization unit based on HFP (HFP unit). The mass ratio of TFE/ethylene/HFP in the TFE/ethylene/HFP copolymer is preferably 40 to 65/30 to 60/0.5 to 20 and more preferably 40 to 65/30 to 60/0.5 to 10.

The melting point of ETFE is preferably 120°C or more, more preferably 140°C or more, even more preferably 150°C or more, particularly preferably 160°C or more, preferably less than 324°C, more preferably 320°C or less, even more preferably 270°C or less, particularly preferably 250°C or less, and most preferably 230°C or less.

EP 4 223 520 A1

The MFR (265°C) of ETFE is preferably 0.5 g/10 min or more, more preferably 1.0 g/10 min or more, even more preferably 1.5 g/10 min or more, particularly preferably 2.0 g/10 min or more, most preferably 2.5 g/10 min or more, preferably 100 g/10 min or less, more preferably 50 g/10 min or less, even more preferably 20 g/10 min or less, and particularly preferably 10 g/10 min or less. The MFR of ETFE is measured at a temperature of 265°C under a load of 5 kg.

As ETFE, the ethylene/tetrafluoroethylene copolymer described in Japanese Patent Laid-Open No. 2019-90013 is also suitably used.

The fluororesin can be produced by polymerizing a fluorine-containing monomer that is to constitute the fluororesin by a polymerization method such as suspension polymerization, solution polymerization, emulsion polymerization, or bulk polymerization. The polymerization method is preferably emulsion polymerization or suspension polymerization and more preferably suspension polymerization. In the polymerization, conditions such as temperature and pressure as well as a polymerization initiator and other additives can be suitably set according to the composition and amount of the fluororesin.

The polymerization initiator to be used can be an oil-soluble radical polymerization initiator or a water-soluble radical polymerization initiator, and an oil-soluble radical polymerization initiator is preferable.

The oil-soluble radical polymerization initiator may be a known oil-soluble peroxide, and representative examples thereof include:

dialkyl peroxycarbonates such as di-n-propyl peroxydicarbonate, diisopropyl peroxydicarbonate, di-sec-butyl peroxydicarbonate, and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro (or fluorochloro)acyl] peroxides.

Examples of the di[fluoro (or fluorochloro)acyl] peroxides include diacyl peroxides represented by [(RfCOO)-]$_2$, wherein Rf is a perfluoroalkyl group, an $\omega$-hydroperfluoroalkyl group, or a fluorochloroalkyl group.

Examples of the di[fluoro (or fluorochloro)acyl] peroxides include di($\omega$-hydro-dodecafluorohexanoyl) peroxide, di($\omega$-hydro-tetradecafluoroheptanoyl) peroxide, di($\omega$-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di($\omega$-chloro-hexafluorobutyryl) peroxide, di($\omega$-chloro-decafluorohexanoyl) peroxide, di($\omega$-chloro-tetradecafluorooctanoyl) peroxide, $\omega$-hydro-dodecafluoroheptanoyl-$\omega$-hydrohexadecafluorononanoyl-peroxide, $\omega$-chloro-hexafluorobutyryl-$\omega$-chloro-decafluorohexanoyl-peroxide, $\omega$-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, organic peroxides such as disuccinic acid peroxide and diglutaric acid peroxide, t-butyl permalate, and t-butyl hydroperoxide. A reducing agent such as a sulfite may be used in combination with the peroxide, and the amount thereof to be used may be 0.1 to 20 times the amount of the peroxide.

In polymerization, a surfactant, a chain transfer agent, and a solvent may be used, and conventionally known ones each may be used.

As the surfactant, a known surfactant may be used, and examples thereof that can be used include nonionic surfactants, anionic surfactants, and cationic surfactants. Of these, a fluorine-containing anionic surfactant is preferable, and a linear or branched fluorine-containing anionic surfactant having 4 to 20 carbon atoms that may contain etherbonded oxygen (that is, an oxygen atom is inserted between carbon atoms) is more preferable. The amount of the surfactant to be added (with respect to polymerization water) is preferably 50 to 5,000 ppm.

Examples of the chain transfer agent include hydrocarbons such as ethane, isopentane, n-hexane, and cyclohexane; aromatics such as toluene and xylene; ketones such as acetone; acetic acid esters such as ethyl acetate and butyl acetate; alcohols such as methanol and ethanol; mercaptans such as methyl mercaptan; and halogenated hydrocarbons such as carbon tetrachloride, chloroform, methylene chloride, and methyl chloride. The amount of the chain transfer agent to be added depends on the magnitude of the chain transfer constant of the compound to be used, and the chain transfer agent is usually used in the range of 0.01 to 20% by mass with respect to the polymerization solvent.

Examples of the solvent include water and mixed solvent of water and alcohol.

In suspension polymerization, a fluorinated solvent may be used in addition to water. Examples of the fluorinated solvent include hydrochlorofluoroalkanes such as $CH_3CClF_2$, $CH_3CCl_2F$, $CF_3CF_2CCl_2H$, and $CF_2ClCF_2CFHCl$; chlorofluoroalkanes such as $CF_2ClCFClCF_2CF_3$ and $CF_3CFClCFClCF_3$; hydrofluoroalkanes such as $CF_3CFHCFHCF_2CF_3$, $CF_2HCF_2CF_2CF_2CF_2H$, and $CF_3CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$,

8

$CF_3CF_2CH_2OCH_2CHF_2$, and $CF_3CHFCF_2OCH_2CF_3$; and perfluoroalkanes such as perfluorocyclobutane, $CF_3CF_2CF_2CF_3$, $CF_3CF_2CF_2CF_2CF_3$, and $CF_3CF_2CF_2CF_2CF_2CF_3$, and of these, perfluoroalkanes are preferable. The amount of the fluorinated solvent to be used is preferably 10 to 100% by mass with respect to an aqueous medium in respect of suspendability and economic efficiency.

The polymerization temperature may be, but is not limited to, 0 to 100°C. The polymerization pressure is suitably determined according to the kind and amount of solvent to be used and other polymerization conditions such as vapor pressure and polymerization temperature, and usually may be 0 to 9.8 MPaG.

When the fluororesin is produced by emulsion polymerization, an aqueous dispersion in which fluororesin particles are dispersed is usually obtained. The fluororesin particles in the aqueous dispersion obtained by emulsion polymerization may be coagulated to recover the fluororesin. When the fluororesin is produced by suspension polymerization, a wet fluororesin usually can be recovered. The recovered fluororesin may be cleaned or dried.

The fluororesin material preferably has electric conductivity. The "electric conductivity" in the present disclosure means that when an inflammable liquid such as gasoline is brought into continuous contact with such an insulator as a resin, electrostatic charges are accumulated and may cause inflammation, but the material has electric characteristics such that those electrostatic charges will not be accumulated.

The fluororesin material may further contain an electroconductive material, for example, an electroconductive filler in addition to the fluororesin. When the electroconductive material is contained, it is possible to prevent build-up of static electricity resulting from, for example, friction between fuel or a chemical solution and the laminate of the present disclosure to thereby thus prevent fire or explosion that may occur due to electrostatic discharge.

The electroconductive filler is not limited, and examples include powders of electroconductive simple substances or fibers of electroconductive simple substances such as metal and carbon; powders of electroconductive compounds such as zinc oxide; and powders having the surface which has been subjected to electroconductive treatment.

The powders of electroconductive simple substances or the fibers of electroconductive simple substances are not limited, and examples include metal powders of copper, nickel, and the like; metal fibers of iron, stainless steel, and the like; and carbon black, carbon fiber, carbon fibril described in, for example, Japanese Patent Laid-Open No. 3-174018, carbon nanotube, carbon nanohorn, and acetylene black.

The powders having the surface which has been subjected to electroconductive treatment are powders obtained by performing electroconductive treatment on the surface of non-electroconductive powders such as glass beads and titanium oxide. A method for the electroconductive treatment is not limited, and examples include metal sputtering and electroless plating. Among the electroconductive fillers described above, carbon black is advantageous in view of economy and is thus preferably used.

The electroconductive material is preferably carbon black because the initial pyrolysis temperature of the fluororesin material increases and additionally the critical shear rate falls within a specific preferable range. Since the initial pyrolysis temperature of the fluororesin material increases and additionally the critical shear rate falls within a specific preferable range, the average particle size of the carbon black is preferably 500 to 1,000 $\mu$m, more preferably 520 to 800 $\mu$m, even more preferably 550 to 750 $\mu$m, and most preferably 600 to 700 $\mu$m.

The carbon black is preferably acetylene black because the initial pyrolysis temperature of the fluororesin material increases and additionally the critical shear rate falls within a specific preferable range.

The content of the electroconductive material is suitably determined according to the kind of fluororesin, the electroconductive performance required of a laminate, the molding conditions, and the like, and is preferably 1 to 30 parts by mass based on 100 parts by mass of the fluororesin. A more preferable lower limit is 5 parts by mass, a more preferable upper limit is 20 parts by mass, an even more preferable lower limit is 8 parts by mass, and a more preferable upper limit is 15 parts by mass. Appropriately adjusting the content of the electroconductive material enables the initial pyrolysis temperature of the fluororesin material, the critical shear rate of the fluororesin material, and the like to be adjusted within a desired range.

In addition to the electroconductive material, the fluororesin material may contain various additives, e.g., reinforcing agents, fillers, UV absorbers, and pigments as long as the object of the present disclosure is not impaired. Use of such additives enables the properties of fluororesin material to increase, such as thermal stability, surface hardness, abrasion resistance, electrostatic properties, and weather resistance.

The fluororesin material of the present disclosure may be in any form and may be in the form of an aqueous dispersion, powder, pellets, or the like. The fluororesin material of the present disclosure is preferably in the form of pellets, which is a normal form obtained after the fluororesin and an electroconductive filler are mixed, because mixing the fluororesin and electroconductive filler enables the initial pyrolysis temperature and critical shear rate of the fluororesin material to be adjusted easily.

The fluororesin material of the present disclosure substantially includes no stabilizer such as a heat stabilizer, particularly cuprous oxide (copper (I) oxide), cupric oxide (copper (II) oxide), cuprous iodide, and cupric iodide. "Substantially includes no" means that cuprous oxide (copper (I) oxide), cupric oxide (copper (II) oxide), cuprous iodide, and cupric iodide are not positively added.

The first fluororesin material of the present disclosure, in the case of being heated at a rate of 10°C/min under an air atmosphere, is required to have an initial pyrolysis temperature of 390°C or more when a mass reduction of the fluororesin material reaches 1% by mass. The first fluororesin material, having an initial pyrolysis temperature of 390°C or more, is excellent in heat stability and can be formed at high temperatures. Being able to be formed at high temperatures enables improvement in the productivity of formed articles.

The "initial pyrolysis temperature" in the present disclosure means a temperature when the mass reduction of the fluororesin material reaches 1% by mass by heating at 10°C/min under an air atmosphere using a thermogravimeter-differential thermal analyzer.

The initial pyrolysis temperature when the mass reduction of the first fluororesin material reaches 1% by mass is preferably 395°C or more, more preferably 400°C or more, even more preferably 410°C or more, and still even more preferably 420°C or more.

The critical shear rate at 280°C of the second fluororesin material of the present disclosure is within a range of 50 to 500 sec$^{-1}$. The critical shear rate falling within the above range enable forming in the forming range wider than that for conventional fluororesin materials and easy coextrusion with other materials. Thus, the second fluororesin material of the present disclosure can be formed into molded articles such as films, tubes, and pipes and also can be coextruded with a generalpurpose resin.

The upper limit of the critical shear rate, if within the range mentioned above, can be set to 300 (sec$^{-1}$), for example, and a more preferable lower limit thereof is 100 (sec$^{-1}$) in respect of excellent thin moldability. An even more preferable upper limit can be 250 (sec$^{-1}$), and an even more preferable lower limit is 120 (sec$^{-1}$).

The critical shear rate in the present disclosure is a shear rate at which a state is reached where a melt fracture begins to occur in a fluororesin flowing out from an orifice having a diameter of 1 mm and a length of 16 mm at a temperature of 280°C under a specific shear stress using a capillary rheometer.

The melt fracture described above is a phenomenon in which the shape of an extrudate becomes a spiral shape, an indefinite shape, a discontinuous shape, shark-skin like, or the like if the shear rate is excessively high when a viscoelastic body is extruded through a narrow hole or slit. Whether a melt fracture has been occurred or not can be confirmed, for example, by magnifying the surface of the fluororesin flown out of the orifice using a microscope or magnifying glass at a magnification of 16.

The second fluororesin material of the present disclosure, of which the critical shear rate is within the range described above, enables a melt fracture on forming to be controlled to thereby enable a smooth surface of a formed article to be obtained.

The laminate of the present disclosure comprises a fluororesin layer containing the first and/or second fluororesin material and a non-fluororesin layer containing a non-fluororesin.

The fluororesin layer is a layer containing the first and/or second fluororesin material. The laminate of the present disclosure, which comprises the fluororesin layer, comprises firmly adhered layers as well as is excellent in oil resistance, fuel barrier properties, chemical resistance, low chemical solution permeability, heat resistance, weather resistance, contamination resistance, and the like.

The non-fluororesin layer is a layer containing a non-fluororesin. The laminate of the present disclosure, because of comprising the non-fluororesin layer, exerts excellent effects obtained by comprising the non-fluororesin layer, in addition to excellent effects obtained by comprising the fluororesin layer.

Examples of the non-fluororesin include resins that have excellent mechanical strength and can primarily serve to maintain pressure resistance and the shape of a molded body (hereinafter referred to as structural member-type resins) such as a polyamide resin , a polyolefin-based resin, a vinyl chloride-based resin, a polyurethane resin, a polyester resin, a polyaramid resin, a polyimide resin, a polyamide-imide resin, a polyphenylene oxide resin, a polyacetal resin, a polycarbonate resin, an acryl-based resin, a styrene-based resin, an acrylonitrile/butadiene/styrene resin [ABS], a cellulose-based resin, a polyether ether ketone resin [PEEK], a polysulfone resin, a polyether sulfone resin [PES], and a polyetherimide resin; and resins having high permeation resistance to fuel and gas (hereinafter referred to as permeation resistant resins) such as an ethylene/vinyl alcohol copolymer resin, a polyphenylene sulfide resin, a polybutylene naphthalate resin, a polybutylene terephthalate resin, and polyphthalamide [PPA].

The non-fluororesin, in particular, is preferably at least one selected from the group consisting of a polyamide resin, an ethylene/vinyl alcohol copolymer (EVOH) resin, and a polyolefin-based resin, more preferably at least one selected from the group consisting of a polyamide resin and an ethylene/vinyl alcohol copolymer resin, and even more preferably a polyamide resin.

The laminate of the present disclosure has excellent mechanical strength when the non-fluororesin layer contains the structural member-type resin, and the laminate of the present disclosure has excellent permeation resistance to fuel when the non-fluororesin layer contains the permeation resistant resin.

The polyamide resin is a polymer having an amide bond [-NH-C(=O)-] as a repeating unit within the molecule.

The polyamide resin may be any of a so-called nylon resin, which is a polymer in which an amide bond within the molecule is bonded to an aliphatic structure or an alicyclic structure, and a so-called aramid resin, which is a polymer in which an amide bond within the molecule is bonded to an aromatic structure.

The polyamide resin (nylon resin) is not limited, and examples include polymers such as polyamide 6, polyamide 66, polyamide 11, polyamide 12, polyamide 610, polyamide 1010, polyamide 612, polyamide 6/66, polyamide 66/12, polyamide 46, a metaxylylenediamine/adipic acid copolymer, polyamide 62, polyamide 92, polyamide 122 and polyamide 142, and aromatic polyamide such as polyamide 6T and polyamide 9T. Two or more of these may be used in combination.

The aramid resin is not limited, and examples include polyparaphenylene terephthalamide and polymetaphenylene isophthalamide.

The polyamide resin may be a polymer in which a structure without an amide bond as a repeating unit is block-copolymerized or graftcopolymerized with a part of the molecule. Examples of such polyamide resins include polyamide-based elastomers such as a polyamide 6/polyester copolymer, a polyamide 6/polyether copolymer, a polyamide 12/polyester copolymer, and a polyamide 12/polyether copolymer. These polyamide-based elastomers are obtained by block copolymerization of a polyamide oligomer and a polyester oligomer via an ester bond, or obtained by block copolymerization of a polyamide oligomer and a polyether oligomer via an ether bond. Examples of the polyester oligomer include polycaprolactone and polyethylene adipate, and examples of the polyether oligomer include polyethylene glycol, polypropylene glycol, and polytetramethylene glycol. The polyamide-based elastomer is preferably a polyamide 6/polytetramethylene glycol copolymer or a polyamide 12/polytetramethylene glycol copolymer.

Preferably the polyamide resin is, in particular, polyamide 6, polyamide 66, polyamide 11, polyamide 12, polyamide 610, polyamide 1010, polyamide 612, polyamide 62, polyamide 6/66, polyamide 66/12, a polyamide 6/polyester copolymer, a polyamide 6/polyether copolymer, a polyamide 12/polyester copolymer, a polyamide 12/polyether copolymer, or the like, in view of obtaining sufficient mechanical strength even when the layer formed of the polyamide resin is thin. Two or more of these may be used in combination.

The amine value of the polyamide resin is preferably 10 to 80 (eq/$10^6$ g). When the amine value is within the above range, excellent interlayer adhesion can be obtained even in the case of coextrusion at a relatively low temperature. When the amine value is less than 10 (eq/$10^6$ g), interlayer adhesion may be insufficient. When the amine value exceeds 80 (eq/$10^6$ g), the mechanical strength of the laminate is insufficient, and coloration likely occurs during storage, resulting in poor handleability. A more preferable lower limit is 15 (eq/$10^6$ g) and an even more preferable lower limit is 23 (eq/$10^6$ g), and a more preferable upper limit is 60 (eq/$10^6$ g) and an even more preferable upper limit is 50 (eq/$10^6$ g).

In the present disclosure, the amine value is a value obtained by thermally dissolving 1 g of a polyamide resin in 50 ml of m-cresol and titrating this solution with 1/10 N aqueous p-toluenesulfonic acid solution using thymol blue as an indicator. The amine value means the amine value of the polyamide resin before laminating unless specified otherwise. Among the amino groups of the polyamide resin before laminating, some are considered to be consumed for adhesion to the adjacent layer; however, since the amount of consumed amino groups is very small relative to the entire layer. Thus, the amine value of the polyamide resin before laminating and the amine value of the laminate of the present disclosure are substantially comparable.

The polyolefin-based resin is a resin having a monomer unit derived from a vinyl group-containing monomer that does not have a fluorine atom. The vinyl group-containing monomer that does not have a fluorine atom is not limited, and preferably has the polar functional group in applications in which interlayer adhesion is required.

The polyolefin-based resin is not limited, and examples include polyolefins such as polyethylene, polypropylene, high-density polyolefin, and low-density polyolefin, and also modified polyolefins obtained by modifying the above polyolefins with maleic anhydride or the like, epoxymodified polyolefins, and amine-modified polyolefins. Of these, high-density polyolefin is preferable.

The ethylene/vinyl alcohol copolymer resin is obtained by saponifying an ethylene/vinyl acetate copolymer obtained from ethylene and vinyl acetate. The content ratio between ethylene and vinyl acetate to be copolymerized is suitably determined according to the proportion of the number of moles of the vinyl acetate unit to be specified by a formula mentioned below.

A preferable ethylene/vinyl alcohol copolymer resin is one in which the vinyl acetate unit P mol% and the saponification degree T% satisfy $P \times T/100 \geq 7$. If $P \times T/100 < 7$, interlayer adhesion may be insufficient. $P \times T/100 \geq 10$ is more preferable. The value of $P \times T/100$ is a measure of a content of the hydroxyl group included by the ethylene/vinyl alcohol copolymer resin, and a larger value of $P \times T/100$ means a higher content of the hydroxyl group included by the ethylene/vinyl alcohol copolymer resin.

The hydroxyl group is a group that may involve in adhesion with a counterpart material to be laminated with the EVOH layer. A higher content of the hydroxyl group in the ethylene/vinyl alcohol copolymer resin causes the interlayer adhesion in the laminate to increase. In the present disclosure, the "counterpart material to be laminated" described above refers to a material laminated contiguously.

In the present disclosure, the "vinyl acetate unit P mol%" is the proportion of the number of moles of vinyl acetate [Ni] derived from vinyl acetate unit with respect to the total number of moles [N] of ethylene and vinyl acetate added in the molecule of the ethylene/vinyl alcohol copolymer resin, meaning the average value of the molar content Pi represented by the following formula:

$$Pi\ (\%)\ =\ (Ni/N)\ \times\ 100.$$

The vinyl acetate unit P mol% is a value obtained by measurement using infrared absorption spectroscopy [IR].

In the present disclosure, the "vinyl acetate unit" is a portion on the molecular structure of the ethylene/vinyl alcohol copolymer resin, meaning the portion derived from vinyl acetate. The vinyl acetate unit may be saponified and have a hydroxyl group or may not be saponified and have an acetoxy group.

The "saponification degree" is a percentage representing the proportion of the number of saponified vinyl acetate units with respect to the total of the number of saponified vinyl acetate unit and number of unsaponified vinyl acetate units. The saponification degree is a value obtained by measuring using infrared absorption spectroscopy [IR].

Examples of an ethylene/vinyl alcohol copolymer resin in which P and T satisfy the formula described above include commercially available products such as EVAL F101 (manufactured by Kuraray Co., Ltd., vinyl acetate unit P = 68.0 mol%; saponification degree T = 95%; P $\times$ T/100 = 64.6), Melthene H6051 (manufactured by TOSOH CORPORATION, vinyl acetate unit P = 11.2 mol%; saponification degree T = 100%; P $\times$ T/100 = 11.2), and TECHNOLINK K200 (manufactured by Taoka Chemical Co., Ltd., vinyl acetate unit P = 11.2 mol%; saponification degree T = 85%; P $\times$ T/100 = 9.52) .

A preferable ethylene/vinyl alcohol copolymer resin has a MFR at 200°C of 0.5 to 100 g/10 min. A case in which the MFR is less than 0.5 g/10 min or more than 100 g/10 min is not preferable because the difference between the melt viscosity of the ethylene/vinyl alcohol copolymer resin and the melt viscosity of the counterpart material tends to increase and thus unevenness may occur in the thickness of each layer. The preferable lower limit is 1 g/10 min, and the preferable upper limit is 50 g/10 min.

The non-fluororesin preferably has a melting point of 50 to 400°C. The lower limit is more preferably 100°C and even more preferably 150°C. The upper limit is more preferably 300°C and even more preferably 250°C.

The melting point is obtained as a temperature corresponding to the maximum value in the heat-of-fusion curve when the temperature is raised at a rate of 10°C/min using a differential scanning calorimeter (DSC) (manufactured by Seiko Instruments Inc.).

The non-fluororesin layer may contain various additives, e.g., stabilizers such as heat stabilizers, reinforcing agents, fillers, UV absorbers, and pigments as long as the object of the present disclosure is not impaired. Use of such additives enables the properties of the non-fluororesin to increase, such as thermal stability, surface hardness, abrasion resistance, electrostatic properties, and weather resistance.

The laminate of the present disclosure is a laminate that comprises a fluororesin layer containing a fluororesin material and a non-fluororesin layer containing a non-fluororesin, wherein the fuel permeation rate X ($g/m^2$/day) of the laminate and Y determined from the surface resistivity of the laminate satisfy all the following relational expressions.

$$Y\ <\ 800/X$$

$$Y\ <\ 250$$

$$X\ <\ 10$$

In the expressions, X represents the fuel permeation rate for the laminate measured at 60°C using CE20, the fuel permeation rate measured at 60°C using CE50, or the fuel permeation rate measured at 60°C using CE85. CE20 means a fuel containing 20% of ethanol.

In the expressions, Y represents a ratio of the surface resistivity measured using CE20, the surface resistivity measured using CE50, or the surface resistivity measured using CE85, based on the surface resistivity measured using CE85 being 100. Each surface resistivity is measured after encapsulating CE20, CE50, or CE85 in the laminate at 60°C for 1,000 hours, then removing the CE20, CE50, or CE85, removing the laminate from an electric furnace at 60°C after 3 hours has passed, and allowing the laminate to be left to stand further for an hour. The ratio of the surface resistivity measured using CE85 based on the surface resistivity measured using CE85 being 100 will be certainly 100. The surface resistivity measured using CE20, CE50, or CE85 means the surface resistivity to be measured after CE20, CE50, or CE85 is encapsulated.

A laminate excellent in fuel barrier properties and electroconductive stability can be obtained by satisfying the conditions of the formulas represented by X and Y.

Immersing the laminate in a chemical solution causes the surface resistivity of the fluororesin layer to be changed in comparison with that before the immersion. Without being bound to any particular theory, the surface resistivity of the fluororesin layer is considered to be changed in accordance with the degree of swelling of the laminate due to the immersion. With recent increase in the concern for environment problems, there is a high demand for use of alcohol fuels as alternatives to fossil fuels. For example, ethanol and gasoline are different in combustion characteristics. A fuel mixture having a low mixing ratio of ethanol is unlikely to cause a problem when combusted in an internal combustion engine for which pure gasoline is assumed to be used as the fuel. Meanwhile, alcohol has a lower quantity of heat per the same volume than that of gasoline and may affect rubber, plastic, and the like. Even when such alcohol is used as the fuel, properties required for a tube, such as fuel barrier properties and electroconductive stability, are desirably maintained. The present inventors have found that use of a tube having a layer containing the fluororesin material of the present disclosure enables fuel barrier properties and electroconductive stability to be suitably maintained.

Specifically, when the fuel permeation rate X measured at 60°C using any of CE20, CE50, or CE85 satisfies X < 10, a laminate excellent in fuel barrier properties can be obtained.

When Y, which represents the ratio of the surface resistivity measured using CE20, the surface resistivity measured using CE50, or the surface resistivity measured using CE85, based on the surface resistivity measured using CE85 being 100, is less than 250, a laminate that can maintain excellent static elimination performance can be obtained even after a fuel having a high mixing ratio of ethanol is encapsulated in the laminate.

When the fuel permeation rate X measured using any of CE20, CE50, and CE85 at 60°C and Y, which represents the ratio of the surface resistivities measured using any of CE20, CE50, and CE85, based on the surface resistivity measured using CE85 being 100, satisfy Y < 800/X, there can be obtained a laminate having an excellent balance between the fuel barrier properties and the electric conductivity.

A laminate that satisfies the conditions of the above formulas represented by X and Y can be obtained still even more easily by providing the laminate with a fluororesin layer containing the fluororesin material of the present disclosure and further allowing the laminate to comprise fluororesin layer/polyamide resin layer/EVOH layer/polyamide resin layer/polyamide resin layer.

The laminate of the present disclosure preferably comprises a fluororesin layer and a polyamide resin layer containing a polyamide resin. In the laminate of the present disclosure, the fluororesin layer and the polyamide resin layer are preferably directly adhered because excellent interlayer adhesive strength is obtained without providing an adhesive layer or the like. Examples of the laminate of the present disclosure include a laminate comprising a fluororesin layer/a polyamide resin layer as the innermost layer/outermost layer. A laminate comprising a fluororesin layer and a polyamide resin layer can combine excellent properties included by the fluororesin, such as oil resistance, fuel barrier properties, chemical resistance, low chemical solution permeability, heat resistance, weather resistance, and contamination resistance and properties included by the polyamide resin, such as high strength, high toughness, lightweight and excellent processability, and in particular, flexibility.

When the polyamide resin has the amine value mentioned above, the fluororesin layer and the polyamide resin layer can be adhered particularly firmly. The interlayer adhesive strength between the fluororesin layer and the polyamide resin layer is preferably 30 N/cm or more.

The interlayer adhesive strength is determined by conducting a 180° delamination test using a Tensilon Universal Tester at a speed of 25 mm/min.

The laminate of the present disclosure preferably comprises a fluororesin layer and an ethylene/vinyl alcohol copolymer (EVOH) layer containing an EVOH resin. The laminate comprising a fluororesin layer and an EVOH layer can combine excellent properties included by the fluororesin, such as oil resistance, fuel barrier properties, chemical resistance, low chemical solution permeability, heat resistance, weather resistance, and contamination resistance and properties included by the EVOH such as fuel barrier properties and low chemical solution permeability.

The laminate of the present disclosure more preferably further comprises a polyamide resin layer in addition to the fluororesin layer and EVOH layer because excellent interlayer adhesive strength is obtained and excellent properties of the 3 resins are obtained. In the laminate of the present disclosure, it is preferred that the fluororesin layer and the polyamide resin layer be directly adhered and the polyamide resin layer and the EVOH layer be directly adhered because excellent interlayer adhesive strength is obtained without providing an adhesive layer or the like.

Examples of the laminate of the present disclosure include:

a laminate comprising a fluororesin layer/a polyamide resin layer as innermost layer/outermost layer,
a laminate comprising a fluororesin layer/an EVOH layer/a polyamide resin layer and a laminate comprising a fluororesin layer/a polyamide resin layer/a EVOH layer, as innermost layer/intermediate layer/outermost layer,
a laminate comprising a fluororesin layer/a polyamide resin layer/an EVOH layer/a polyamide resin layer as innermost layer/inner layer/intermediate layer/outermost layer,
a laminate comprising a fluororesin layer/a polyamide resin layer/an EVOH layer/a polyamide resin layer/a polyamide resin layer and a laminate comprising a fluororesin layer/a polyamide resin layer/an EVOH layer/a polyamide resin layer/a polyolefin resin layer, as innermost layer/inner layer/intermediate layer/outer layer/outermost layer, and
a laminate comprising a fluororesin layer/a polyamide resin layer/a polyamide resin layer/an EVOH layer/a polyamide resin layer/a polyamide resin layer, a laminate comprising a fluororesin layer/a polyamide resin layer/an EVOH layer/a polyamide resin layer/a polyamide resin layer/a polyolefin resin layer, a laminate comprising a fluororesin layer/a polyamide resin layer/an EVOH layer/polyamide resin layer/a polyolefin resin layer/polyamide resin layer, and a laminate comprising a fluororesin layer/a fluororesin layer/a polyamide resin layer/an EVOH layer/a polyamide resin layer/a polyolefin resin layer, as innermost layer/inner layer 1/inner layer 2/intermediate layer/outer layer/outermost layer.

When the laminate of the present disclosure comprises two or more fluororesin layers, the fluororesins contained in each layer may be of the same or different kind. When the laminate of the present disclosure comprises two or more polyamide resin layers, the polyamide resins contained in each layer may be of the same or different kind. When the laminate of the present disclosure comprises two or more EVOH layers, the ethylene/vinyl alcohol copolymers contained in each layer may be of the same or different kind. In the laminate of the present disclosure, the boundary between the layers that are in contact does not necessarily need to be clear, and the laminate may have a layer structure having a concentration gradient in which the molecular chains of the polymers forming the respective layers mutually enter the layers from the surfaces in contact with each other.

The laminate of the present disclosure may have another layer. The thickness, shape, and the like of each layer of the laminate of the present disclosure may be suitably selected according to the purpose of use, the situation of use, and the like.

A monolayer tube (hose) of the present disclosure contains the fluororesin material described above. A multilayer tube (hose) of the present disclosure is formed of the laminate described above. In any tube, the inner surface of the tube is preferably formed of the fluororesin material described above. The fluororesin material described above, which has a specific initial pyrolysis temperature or critical shear rate, is excellent in forming fabricability and enables the inner surface of a tube formed of the fluororesin to be markedly smooth. The surface roughness Ra of the inner surface of the tube is 1.0 $\mu$m or less, for example, preferably 0.5 $\mu$m or less, more preferably 0.2 $\mu$m or less, and may be 0.01 $\mu$m or more. The surface roughness can be measured in accordance with JIS B0601-1994.

The outer diameter of the tube is preferably 2 to 20 mm, more preferably 3 mm or more, even more preferably 4 mm or more, most preferably 6 mm or more, more preferably 18 mm or less, even more preferably 16 mm or less, and most preferably 14 mm or less.

The inner diameter of the tube is preferably 1 to 15 mm, more preferably 2 mm or more, even more preferably 3 mm or more, most preferably 4 mm or more, more preferably 13 mm or less, even more preferably 11 mm or less, and most preferably 10 mm or less.

The thickness (the difference between the outer diameter and the inner diameter) of the tube is preferably 0.5 to 8 mm, more preferably 0.6 to 6 mm, even more preferably 0.6 to 4 mm, and most preferably 0.7 to 2 mm.

The thickness of the fluororesin layer in the laminate and the tube is preferably 0.05 to 0.4 mm, more preferably 0.06 to 0.3 mm, and even more preferably 0.07 to 0.25 mm. The thickness of the fluororesin layer in the laminate and the tube is also preferably allowed to fall within the range of 0.05 to 0.2 mm. When the laminate and the tube comprise two or more fluororesin layers, the thickness of the fluororesin layer is the total thickness of the layers.

The thickness of the non-fluororesin layer in the laminate and the tube is preferably 0.05 to 4 mm, more preferably 0.1 to 3 mm, and even more preferably 0.5 to 2 mm. When an EVOH layer is included as the non-fluororesin layer, the thickness of the EVOH layer in the laminate and the tube can be 0.05 to 0.3 mm. When the laminate and the tube comprise two or more non-fluororesin layers, the thickness of the non-fluororesin layer is the total thickness of the layers.

When the laminate and the tube have a two-layer structure of innermost layer/outermost layer, the thickness of the innermost layer is preferably 0.05 to 0.4 mm, more preferably 0.06 to 0.3 mm, and even more preferably 0.07 to 0.25 mm. The thickness of the outermost layer is preferably 0.05 to 4 mm, more preferably 0.1 to 3 mm, and even more preferably 0.5 to 2 mm.

When the laminate and the tube has a five-layer structure of innermost layer/inner layer/intermediate layer/outer layer/outermost layer, the thickness of the innermost layer is preferably 0.01 to 0.5 mm, more preferably 0.02 to 0.25 mm, and even more preferably 0.03 to 0.15 mm.

The thickness of the inner layer is preferably 0.01 to 1.0 mm, more preferably 0.03 to 0.5 mm, and even more preferably 0.05 to 0.3 mm.

The thickness of the intermediate layer is preferably 0.01 to 0.5 mm, more preferably 0.02 to 0.25 mm, and even more preferably 0.03 to 0.15 mm.

The thickness of the outer layer is preferably 0.01 to 1.0 mm, more preferably 0.03 to 0.5 mm, and even more preferably 0.05 to 0.3 mm.

The thickness of the outermost layer is 0.01 to 1.0 mm, more preferably 0.03 to 0.7 mm, and even more preferably 0.05 to 0.5 mm.

The fluororesin contained in the fluororesin material of the present disclosure, which is excellent in oil resistance, fuel barrier properties, chemical resistance, low chemical solution permeability, heat resistance, weather resistance, contamination resistance, and the like, can be used in various fields such as semiconductor, automobile, construction, electric and electronic, chemical plant, and pharmaceuticalrelated fields. The fluororesin contained in the fluororesin material of the present disclosure has high adhesion to other materials. Even when a tube is produced by extruding at a high line speed, use of the fluororesin material of the present disclosure enables a tube to be obtained which comprises firmly adhered layers, has a smooth inner surface, and additionally has a uniform thickness. The fluororesin material of the present disclosure can be extruded not only at a high line speed but also at a low line speed. Accordingly, the fluororesin material of the present disclosure can be suitably used particularly for laminates and tubes.

The fluororesin material of the present disclosure can be formed to obtain various molded products such as films, sheets, tubes (hoses), bottles, and tanks. Molded products containing the fluororesin material of the present disclosure are excellent in oil resistance, fuel barrier properties, chemical resistance, low chemical solution permeability, heat resistance, weather resistance, contamination resistance, and the like.

The laminate of the present disclosure can have various shapes such as a film shape, a sheet shape, a tube (hose) shape, a bottle shape, and a tank shape. The film shape, the sheet shape, the tube shape, and the hose shape may have a wavy shape, a corrugated shape, a convoluted shape, or the like.

The tube (hose) may have a wavy shape, a corrugated shape, a convoluted shape, or the like. When the tube (hose) has a wavy shape, having a region in which a plurality of annular ridges and grooves in a wavy form are provided, one side of the annulus can be compressed and the other side can be expanded outward in that region, which enables ease of bending the laminate by a desired angle without causing stress fatigue or interlayer delamination.

The method of forming the wavy region is not limited, and the wavy region can be easily formed by creating a straight tube and then, for example, mold-shaping the tube into a predetermined wavy shape or the like.

Examples of a method for forming the fluororesin material include, but are not limited to, a heat compression molding method, a transfer molding method, an extrusion forming method, an injection molding method, and a calender molding method. For forming, molding machines for fluoropolymers commonly used such as an injection molding machine, a blow molding machine, an extruder, and various coating machines can be used to produce molded products and laminates of various shapes such as a sheet shape and a tube shape. Forming methods such as multilayer extrusion forming, multilayer blow molding, and multilayer injection molding can produce multilayer molded products such as multilayer tubes, multilayer hoses, and multilayer tanks.

Examples of the method for producing the laminate of the present disclosure include:

(1) a method involving forming a laminate having a multilayer structure in one step by coextruding the polymers that form the respective layers to thermally fuse (melt-adhere) the layers (coextrusion molding);
(2) a method involving laminating the layers that are separately prepared by an extruder and adhering the layers by thermal fusion;
(3) a method involving forming a laminate by extruding by an extruder, onto the surface of a layer prepared in advance, a polymer that forms a layer to be adjacent to the aforementioned layer; and
(4) a method involving electrostatically coating the surface of a layer prepared in advance with a polymer that forms a layer to be adjacent to the aforementioned layer, and then heating the resulting coated product entirely or from the coated side to thermally melt the polymer subjected to coating, to thereby form a layer.

When the laminate of the present disclosure is a tube or a hose, a method corresponding to the above (2) is (2a) a method involving separately forming each cylindrical layer by an extruder and coating the layer to be an inner layer with the other layer as a heat-shrinkable tube to be in contact with the inner layer; a method corresponding to the above (3) is (3a) a method involving, first, forming a layer to be an inner layer by an inner-layer extruder and forming a layer that is to be in contact with the aforementioned layer on the outer circumferential surface thereof by an outer-layer extruder; and a method corresponding to the above (4) is (4a) a method involving electrostatically applying a polymer for forming an inner layer to the inside of a layer to be in contact with the inner layer, and then placing the resulting coated product in a heating oven to heat the coated product entirely or inserting a rod-shaped heating device into the cylindrical coated product to heat the cylindrical coated product from inside, to thereby thermally melting and molding the polymer for the inner layer.

As long as each layer of the laminate and the tube of the present disclosure can be coextruded, the laminate is generally formed by the coextrusion molding of the above (1). Examples of the coextrusion molding include conventionally known multi-layer coextrusion production methods such as a multi-manifold method and a feed block method.

In the molding methods (2) and (3) above, after each layer is formed, the surface of each layer that comes into contact with another layer may be surface-treated in order to increase interlayer adhesion. Examples of such surface treatment include etching treatment such as sodium etching treatment; corona treatment; and plasma treatment such as low-temperature plasma treatment.

As a method for molding the laminate of the present disclosure, it is also possible to use a molding method involving laminating a plurality of materials in multiple stages by rotational molding. In this case, the melting point of the outer-layer material does not necessarily need to be higher than the melting point of the inner-layer material, and the melting point of the inner-layer material may be 100°C or more higher than the melting point of the outer-layer material. In this case, preferably there is also a heating part inside.

The laminate and tube of the present disclosure, which have a specific initial pyrolysis temperature or critical shear rate and contain a fluororesin material excellent in forming fabricability, can be produced by extruding the fluororesin material at a high line speed. The line speed is preferably 15 m/min or more, more preferably 20 m/min or more, and may be 100 m/min or less. The laminate of the present disclosure, even if obtained by forming at such a high line speed, comprises firmly adhered layers and has a smooth surface. The tube of the present disclosure, even if obtained by forming at such a high line speed, has a smooth inner surface. The laminate and the tube of the present disclosure also can be produced by extruding a fluororesin at a low line speed. The line speed may be 8 to 100 m/min, for example.

The laminate and the tube of the present disclosure can be produced by forming a fluororesin and other materials as required using an extruder. As the extruder, an extruder comprising a cylinder, an adapter, and a spiral multimanifold die or crosshead die having a die head and a die chip can be used, but is not limited thereto.

An extruder usually comprises a hopper, a screw, a cylinder, an adapter (a connecting portion for the screw and a die), and a die. An extruder comprising a screw may be a single screw extruder or a twin screw extruder. Volatile components generated from the fluororesin also can be removed by providing the cylinder with a vent hole to open the vent hole or reduce the pressure.

The cylinder temperature is preferably 150 to 350°C and more preferably 180 to 330°C. The die temperature is preferably 230 to 330°C and more preferably 250 to 320°C. The chip temperature is preferably 230 to 330°C and more preferably 250 to 320°C. A laminate having a smoother surface or a tube having a smoother inner surface can be obtained by setting the die temperature and the chip temperature within the range described above. Particularly when a polyamide resin or an ethylene/vinyl alcohol copolymer resin is coextruded with a fluororesin (for example, ETFE) to produce a laminate or a multilayer tube, the die temperature and the chip temperature described above are preferably set as described above in order to obtain a laminate having a smoother surface or a tube having a smoother inner surface.

The fluororesin material, laminate, and tube of the present disclosure can be used in the following applications.

Films and sheets: such as food films, food sheets, chemical films, chemical sheets, release films, diaphragms of diaphragm pumps, and various packings,

tubes and hoses: such as chemical solution tubes or chemical solution hoses, coating material tubes or coating material hoses (including printer applications), fuel tubes or fuel hoses such as automobile fuel tubes or automobile fuel hoses, solvent tubes or solvent hoses, automobile radiator hoses, air conditioner hoses, brake hoses, wire claddings, food and beverage tubes or food and beverage hoses, underground tubes or hoses for gas stations, and submarine oil field tubes or hoses (including injection tubes and crude oil transfer tubes),

bottles, containers, and tanks: such as automobile radiator tanks, fuel tanks such as gasoline tanks, solvent tanks, coating material tanks, chemical solution containers such as semiconductor chemical solution containers, and food and beverage tanks, and

others: such as various automobile seals such as carburetor flange gaskets and fuel pump O-rings, various machine-related seals such as hydraulic equipment seals, gears, medical tubes (including catheters), and cableway pipes.

Embodiments have been described above, but it will be understood that various changes in forms and details can be made without departing from the gist and the scope of the claims.

EXAMPLES

Next, embodiments of the present disclosure will now be described by way of Examples, but the present disclosure is not limited solely to the Examples.

The numerical values of the Examples were measured by the following methods.

<Polymer composition>

$^{19}$F-NMR measurement was conducted using the fluororesin obtained in each Example and a nuclear magnetic resonance apparatus AC300 (manufactured by Bruker-Biospin AG) to determine the polymer composition from the integrated values of peaks. Depending on the kind of monomer, the results of elemental analysis were suitably combined to determine the polymer composition (the content of each monomer unit of the polymer).

<Melting point>

Thermal measurement was conducted using the fluororesin obtained in each Example and a differential scanning calorimeter RDC220 (manufactured by Seiko Instruments Inc.) in accordance with ASTM D 4591 at a temperature-increasing rate of 10°C/min, and the melting point of the fluororesin material was determined from the peak of the endothermic curve obtained.

<Melt flow rate (MFR)>

The mass (g/10 min) of the fluororesin material flowing out from a nozzle having an inner diameter of 2 mm and a length of 8 mm per 10 minutes at 265°C or 297°C under a load of 5 kg was determined as the MFR using the fluororesin obtained in each Example and a melt indexer (manufactured by Yasuda Seiki Seisakusho Ltd.) in accordance with ASTM D 1238.

<Number of carbonyl groups>

Pellets of the fluororesin obtained in each Example were compressionmolded at room temperature to produce films having a thickness of 50 to 200 $\mu$m. In an infrared absorption spectrum analysis of this film, a peak assigned to the carbonyl group of a carbonate group [-OC(=O)O-] appears at an absorption wavelength of 1817 cm$^{-1}$ [$\nu_{(C=O)}$], and a peak assigned to the carbonyl group of a carboxylic acid fluoride group [-COF] appears at an absorption wavelength of 1884 cm$^{-1}$ [$\nu_{(C=O)}$], and thus the absorbance of the $\nu_{(C=O)}$ peaks was measured. The number of carbonyl groups per $10^6$ main-chain carbon atoms of the fluororesin was calculated according to the following formula.

$$\text{Number of carbonyl groups (carbonate groups or carboxylic acid fluoride groups) (per } 10^6 \text{ main-chain carbon atoms)} = (l \times K)/t$$

l:    Absorbance
K:   Correction factor (-OC(=O)O-R: 1426, -COF: 405)
t:    Film thickness (mm)

The infrared absorption spectrum analysis was conducted by scanning 40 times using a Perkin-Elmer FTIR spectrometer 1760X (manufactured by The Perkin-Elmer Corporation). The obtained IR spectrum was subjected to automatic baseline judgment by Perkin-Elmer Spectrum for Windows Ver. 1.4C to measure the absorbance of the peaks at 1817 cm$^{-1}$ and 1884 cm$^{-1}$. The thickness of the films was measured with a micrometer gauge.

<Initial pyrolysis temperature>

The fluororesin material obtained in each Example was used to measure the initial pyrolysis temperature. The temperature was raised at 10°C/min under an air atmosphere using a thermogravimeter-differential thermal analyzer TG/DTA6200 or TG/DTA7200 (manufactured by Hitachi High-Tech Science Corporation), and the temperature when the mass reduction of the fluororesin material reached 1% by mass was defined as the initial pyrolysis temperature.

<Critical shear rate>

The shear rate (sec$^{-1}$) when a state was reached where a melt fracture began to occur in a fluororesin flowing out from an orifice having a diameter of 1 mm and a length of 16 mm at 280°C under a shear stress was measured using the fluororesin material obtained in each Example and a Capilograph (manufactured by Bohlin Instruments Ltd.). The melt fracture on the polymer surface was observed by a microscope at a magnification of 16.

Example 1 (Production of fluororesin A)

380 L of distilled water was placed in an autoclave. After sufficient nitrogen purging, 166 kg of octafluorocyclobutane, 83 kg of HFP, and 0.3 kg of perfluoro(1,1,5-trihydro-1-pentene) (CH$_2$=CF(CF$_2$)$_3$H) were loaded, and the inside of the system was kept at 35°C and a stirring speed of 200 rpm. Thereafter, TFE was injected up to 0.87 MPa, and further subsequently, Et was injected up to 0.95 MPa. Then, 6.3 kg of di-n-propyl peroxydicarbonate was placed, and polymerization was started. The pressure inside the system decreases as the progress of the polymerization, and thus a gas mixture of TFE/Et/HFP = 46/44/10 mol% was continuously supplied to keep the pressure inside the system at 0.95 MPa. Then, perfluoro(1,1,5-trihydro-1-pentene) was continuously loaded up to a total amount of 3.2 kg, and stirring was continued for 23 hours. The pressure was released to atmospheric pressure, and the reaction product was recovered.

The obtained reaction product was cleaned and dried to obtain 250 kg of a powdery fluororesin. The obtained fluororesin had the following physical properties.

```
Polymer composition (mol%): TFE/Et/HFP/perfluoro(1,1,5-trihydro-1-
pentene) = 45.5/44.4/9.5/0.6
```

Melting point: 197°C
Melt flow rate (265°C) : 28.9 g/10 min
Number of carbonyl groups (carbonate groups and carboxylic acid fluoride groups): $314/10^6C$

The powdery fluororesin and carbon black (DENKA BLACK manufactured by Denka Company Limited, average particle size: 650 $\mu$m) were kneaded and formed using a single screw extruder to obtain a pelletized fluororesin material. The obtained fluororesin material had the following physical properties.

Content of carbon black: 11% by mass
Initial pyrolysis temperature: 425°C
Critical shear rate: 170 sec$^{-1}$

Laminates (multilayer tubes) obtained using the produced fluororesin materials will be described with reference to Examples. The numerical values of the laminates were measured by the following methods.

<Thickness of layers of laminate>

The thickness of layers constituting the tubes obtained in Examples and Comparative Examples was measured with a micrometer gauge.

<Adhesive strength>

A 1 cm-width test piece was cut off from the tube obtained in Examples and Comparative Examples and subjected to a 180° delamination test at a speed of 25 mm/min using a Tensilon Universal Tester. The average of 5 local maximum points in the elongation amount - tensile strength graph was determined as the adhesive strength (N/cm).

<Surface roughness Ra>

A test piece was produced by cutting the tube obtained in Examples and Comparative Examples, and the surface roughness Ra was measured at a point of the test piece corresponding to the inner surface of the tube. Measurement at 5 measurement points was repeated 3 times using a surface roughness measuring machine (SURFTEST SV-600 manufactured by Mitutoyo Corporation) in accordance with JIS B0601-1994, and the average of the obtained measurements was defined as the surface roughness Ra.

<Fuel permeation rate>

The tube obtained in each of Examples and Comparative Examples was cut, and the inner diameter and the length thereof were measured. A Swagelok coupling was attached to both ends of the tube, the tube was filled with CE20, CE50, or CE85 (a fuel in which 20, 50, or 80% by volume of ethanol was mixed), and the cap was closed.
The fuel inside was replaced every other week while the tube was kept at 60°C. After 1,000 hours passed, the fuel permeation rate ($g/m^2$/day) was calculated from the mass change per hour and the inner area of the tube.

<Surface resistivity>

The tube obtained in each of Examples and Comparative Examples was cut, and the inner diameter and the length thereof were measured. The tube was placed in an electric furnace at 60°C, taken out after 3 hours passed, and allowed to stand for an hour. The resistance value of the tube was measured by applying a voltage of 500 V using a resistance meter (3454-10 manufactured by HIOKI E.E. Corporation) based on SAE J 2260, and the surface resistivity (M$\Omega$/square) was measured from the inner diameter and length of the tube.

In Examples, the following materials were used in addition to the fluororesin material.

Polyamide 12
Vestamid X7297 manufactured by Daicel-Evonik Ltd.
Polyamide 612
Vestamid SX8002 manufactured by Daicel-Evonik Ltd.
Ethylene/vinyl alcohol copolymer resin
F101B manufactured by Kuraray Co., Ltd.

Example 2 (Production of laminate)

Using a five-component five-layer tube extrusion apparatus equipped with a multimanifold (manufactured by PLABOR Research Laboratory of Plastics Technology Co., Ltd.), polyamide 12 as a layer (E), polyamide 612 as layers (B and D), an ethylene/vinyl alcohol copolymer resin as a layer (C), and the fluororesin A as a layer (A) were fed to five extruders, respectively, to mold a 5-component 5-layer multilayer tube having an outer diameter of 8 mm and an inner diameter of 6 mm, according to the extrusion conditions shown in Table 2. The multilayer tube has a layer arrangement of the layer (A)/layer (B)/layer (C)/layer (D)/layer (E), and the layer (A) is the innermost layer. The evaluation results are shown in Table 2 and Table 3.

Comparative Example 1

Using a two-component two-layer tube extrusion apparatus equipped with a multimanifold (manufactured by PLABOR Research Laboratory of Plastics Technology Co., Ltd.), polyamide 12 as a layer (E) was fed to one extruder, to mold a monolayer tube having an outer diameter of 8 mm and an inner diameter of 6 mm, according to the extrusion conditions shown in Table 2. The evaluation results are shown in Table 2 and Table 3.

[Table 2]

Table 2

| | | Example 2 | Comparative Example 1 |
|---|---|---|---|
| Layer (A) | Cylinder temperature (°C) | 260-280 | |
| | Adapter temperature (°C) | 280 | |
| Layer (B) | Cylinder temperature (°C) | 230-260 | |
| | Adapter temperature (°C) | 260 | |
| Layer (C) | Cylinder temperature (°C) | 200-220 | |
| | Adapter temperature (°C) | 220 | |
| Layer (D) | Cylinder temperature (°C) | 230-260 | |
| | Adapter temperature (°C) | 260 | |
| Layer (E) | Cylinder temperature (°C) | 210-250 | 200-230 |
| | Adapter temperature (°C) | 250 | 240 |
| | Die temperature (°C) | 280 | 240 |
| | Line speed (m/min) | 30 | 8 |
| Thickness μm | Layer (A) | 100 | |
| | Layer (B) | 350 | |
| | Layer (C) | 150 | |
| | Layer (D) | 100 | |
| | Layer (E) | 300 | 1000 |

**EP 4 223 520 A1**

(continued)

|  | Example 2 | Comparative Example 1 |
|---|---|---|
| Adhesive strength | 51 | - |
| Surface roughness Ra ($\mu$m) | 0.15 | 0.03 |

[Table 3]

Table3

|  |  | Example 2 | Comparative Example 1 |
|---|---|---|---|
| Permeation rate g/m$^2$/day | CE 20 | 2.1 | 163.0 |
|  | CE 50 | 4.0 | 377.0 |
|  | CE 85 | 4.3 | 310.0 |
| Surface resistivity after immersion ($\Omega$/square) | CE 20 | 0.141 | 0.022 |
|  | CE 50 | 0.113 | 0.009 |
|  | CE 85 | 0.081 | 0.006 |
| Y | CE 20 | 172 | 367 |
|  | CE 50 | 138 | 150 |
|  | CE 85 | 100 | 100 |

## Claims

1. A fluororesin material containing a fluororesin, wherein

   the fluororesin has a carbonyl group, a total number of carbonyl groups being 1 or more and less than 800 per $10^6$ main-chain carbon atoms, and
   the fluororesin contains ethylene unit and tetrafluoroethylene unit, and wherein
   when the fluororesin material is heated at a rate of 10°C/minute under an air atmosphere, an initial pyrolysis temperature when a mass reduction of the fluororesin material reaches 1% by mass is 390°C or more.

2. A fluororesin material containing a fluororesin, wherein

   the fluororesin has a carbonyl group, a total number of carbonyl groups being 1 or more and less than 800 per $10^6$ main-chain carbon atoms, and
   the fluororesin contains ethylene unit and tetrafluoroethylene unit, and wherein
   the fluororesin material has a critical shear rate at 280°C within a range of 50 to 500 sec$^{-1}$.

3. The fluororesin material according to claim 1 or 2, having electrical conductivity.

4. The fluororesin material according to any one of claims 1 to 3, wherein the fluororesin is a melt-fabricable fluororesin.

5. The fluororesin material according to any one of claims 1 to 4, wherein the fluororesin further contains hexafluoropropylene unit.

6. The fluororesin material according to any one of claims 1 to 5, further containing an electroconductive material.

7. The fluororesin material according to claim 6, wherein the electroconductive material is carbon black.

8. The fluororesin material according to claim 7, wherein an average particle size of the carbon black is 500 to 1,000 $\mu$m.

9. A laminate comprising:

   a fluororesin layer containing the fluororesin material according to any one of claims 1 to 8; and
   a non-fluororesin layer containing a non-fluororesin.

10. A laminate comprising:

   a fluororesin layer containing a fluororesin material; and
   a non-fluororesin layer containing a non-fluororesin, wherein a fuel permeation rate X (g/m$^2$/day) of the laminate and Y determined from a surface resistivity of the laminate satisfy all the following relational expressions:

$$Y < 800/X$$

$$Y < 250$$

$$X < 10$$

   wherein X represents the fuel permeation rate for the laminate measured at 60°C using CE20, the fuel permeation rate measured at 60°C using CE50, or the fuel permeation rate measured at 60°C using CE85; and
   Y represents a ratio of the surface resistivity measured using CE20, the surface resistivity measured using CE50, or the surface resistivity measured using CE85, based on the surface resistivity measured using CE85 being 100; and each surface resistivity is measured after encapsulating CE20, CE50, or CE85 in the laminate at 60°C for 1,000 hours, then removing the CE20, CE50, or CE85, removing the laminate from an electric furnace at 60°C after 3 hours has passed, and allowing the laminate to be left to stand for an hour.

11. The laminate according to claim 9 or 10, wherein a thickness of the fluororesin layer is 50 to 200 μm.

12. The laminate according to any one of claims 9 to 11, comprising a polyamide resin layer containing a polyamide resin as the non-fluororesin layer.

13. The laminate according to claim 12, wherein the fluororesin layer and the polyamide resin layer are adhered, and an interlayer adhesive strength between the fluororesin layer and the polyamide resin layer is 30 N/cm or more.

14. The laminate according to any one of claims 9 to 13, comprising an ethylene/vinyl alcohol copolymer (EVOH) layer containing an EVOH resin as the non-fluororesin layer.

15. The laminate according to claim 14, wherein a thickness of the EVOH layer is 50 to 300 μm.

16. A multilayer tube formed of the laminate according to any one of claims 9 to 15.

17. A monolayer tube containing the fluororesin material according to any one of claims 1 to 8.

18. The tube according to claim 16 or 17, wherein an inner surface of the tube is formed of the fluororesin material, and the inner surface has a surface roughness Ra of 1.0 μm or less.

19. A method for producing the tube according to any one of claims 16 to 18, comprising forming the fluororesin material at a line speed of 15 m/minute or more to obtain the tube.

## INTERNATIONAL SEARCH REPORT

| International application No. |
|---|
| **PCT/JP2021/036298** |

**A.    CLASSIFICATION OF SUBJECT MATTER**

*B32B 27/30*(2006.01)i; *C08F 214/26*(2006.01)i; *C08L 27/18*(2006.01)i; *C08K 3/04*(2006.01)i; *F16L 9/12*(2006.01)i
FI:    C08F214/26; F16L9/12; C08K3/04; C08L27/18; B32B27/30 D

According to International Patent Classification (IPC) or to both national classification and IPC

**B.    FIELDS SEARCHED**

Minimum documentation searched (classification system followed by classification symbols)

B32B27/30; C08F214/26; C08L27/18; C08K3/04; F16L9/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2006-29574 A (UBE IND LTD) 02 February 2006 (2006-02-02)<br>  claims 1-10, paragraphs [0001], [0108], [0172], [0175], [0187], [0188], examples 1, 5 | 1-19 |
| X | JP 2012-215278 A (UBE INDUSTRIES LTD) 08 November 2012 (2012-11-08)<br>  claims 1-12, paragraphs [0010], [0098], [0141], [0170], [0188], [0204], example 1 | 1-9,11-19 |
| A | | 10 |
| A | JP 2018-197562 A (UBE INDUSTRIES) 13 December 2018 (2018-12-13)<br>  entire text | 1-19 |
| A | WO 2017/170985 A1 (UBE INDUSTRIES) 05 October 2017 (2017-10-05)<br>  entire text | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2021** | **16 November 2021** |

| Name and mailing address of the ISA/JP | Authorized officer |
|---|---|
| **Japan Patent Office (ISA/JP)**<br>3-4-3 Kasumigaseki, Chiyoda-ku, Tokyo 100-8915<br>**Japan** | |
| | Telephone No. |

Form PCT/ISA/210 (second sheet) (January 2015)

INTERNATIONAL SEARCH REPORT
Information on patent family members

International application No.

**PCT/JP2021/036298**

| Patent document cited in search report | | | Publication date (day/month/year) | Patent family member(s) | | | Publication date (day/month/year) |
|---|---|---|---|---|---|---|---|
| JP | 2006-29574 | A | 02 February 2006 | (Family: none) | | | |
| JP | 2012-215278 | A | 08 November 2012 | (Family: none) | | | |
| JP | 2018-197562 | A | 13 December 2018 | (Family: none) | | | |
| WO | 2017/170985 | A1 | 05 October 2017 | US | 2019/0091962 | A1 | |
| | | | | entire text | | | |
| | | | | EP | 3437850 | A1 | |
| | | | | KR | 10-2018-0129866 | A | |
| | | | | CN | 109311259 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001070485 A
- WO 9945044 A
- WO 2005100420 A
- JP 2019090013 A
- JP 3174018 A